# EUROPEAN PATENT APPLICATION

(11) **EP 4 269 117 A1**
(43) Date of publication of application: **01.11.2023**
(21) Application number: 21910291.0
(22) Date of filing: 07.12.2021
(51) Int. Cl.: B41M 5/00, B41J 2/01, C09D 11/40

(54) **IMAGE RECORDING METHOD AND INK JET RECORDED MATTER**

(30) Priority: 25.12.2020 JP 2020217654
(71) Applicant: FUJIFILM Corporation, Tokyo 106-8620 (JP)
(72) Inventor: SASADA, Misato, Ashigarakami-gun, Kanagawa 258-8577 (JP)
(74) Representative: Klunker IP Patentanwälte PartG mbB
(86) International application number: PCT/JP2021/044946
(87) International publication number: WO 2022/138142

(57) **Abstract**

Provided is an image recording method including a step of preparing at least two inks including a first ink and a second ink, a step of heating a substrate, a step of applying the at least two inks onto the heated substrate by using an inkjet recording method, and a step of irradiating the at least two inks with an active energy ray, in which in the step of applying the at least two inks, a mixed region where the at least two inks are mixed together by the applying is formed in at least a part on the substrate, the first ink contains a first polymerizable liquid crystal compound, and the second ink contains a second chiral compound. Also provided is an ink jet-recorded material.

## Description

### BACKGROUND OF THE INVENTION

### 1. Field of the Invention

The present disclosure relates to an image recording method and an ink jet-recorded material.

### 2. Description of the Related Art

In recent years, an image recording method using an ink containing a liquid crystal compound has been proposed. Cholesteric liquid crystals prepared by adding a chiral agent to a liquid crystal compound have unique light reflectivity which enables the liquid crystals to change tone depending on the viewing angle. In a case where an ink containing a liquid crystal compound is used, it is possible to record a special image that is invisible in other image recording materials. Therefore, such an ink is expected to be applied to special decorations for articles such as packaging materials and security printing.

For example, WO2020/194831A discloses an image recording method including a base layer forming step of forming a base layer by applying a base ink onto a substrate by an ink jet recording method and an image recording step of recording an ink image by applying an image recording ink containing a polymerizable liquid crystal compound and a chiral compound onto the base layer by an inkjet recording method.

### SUMMARY OF THE INVENTION

However, WO2020/194831A merely discloses the application of one image recording ink alone onto the base layer, and does not have description focusing on the reproduction of various colors.

The present disclosure has been made in consideration of such circumstances, and according to an embodiment of the present invention, there is provided an image recording method and an ink jet-recorded material capable of reproducing various colors with high color developability.

The present disclosure includes the following aspects.
<1> An image recording method including a step of preparing at least two inks including a first ink and a second ink, a step of heating a substrate, a step of applying the at least two inks onto the heated substrate by using an inkjet recording method, and a step of irradiating the at least two inks with an active energy ray, in which in the step of applying the at least two inks, a mixed region where the at least two inks are mixed together by the applying is formed in at least a part on the substrate, the first ink contains a first polymerizable liquid crystal compound, and the second ink contains a second chiral compound.
<2> The image recording method described in <1>, in which the first ink contains the first polymerizable liquid crystal compound, a first chiral compound, and a first organic solvent, the second ink contains a second polymerizable liquid crystal compound, the second chiral compound, and a second organic solvent, and an absolute value of a difference between a maximal reflection wavelength of an ink film formed of the first ink and a maximal reflection wavelength of an ink film formed of the second ink is 100 nm or more.
<3> The image recording method described in <1> or <2>, in which a maximal reflection wavelength of an ink film formed of the first ink is 380 nm to 490 nm, and a maximal reflection wavelength of an ink film formed of the second ink is 600 nm to 800 nm.
<4> The image recording method described in any one of <1> to <3>, in which in the step of preparing at least two inks, a third ink that contains a third polymerizable liquid crystal compound, a third chiral compound, and a third organic solvent is additionally prepared, and an absolute value of a difference between a maximal reflection wavelength of an ink film formed of the first ink or a maximal reflection wavelength of an ink film formed of the second ink and a maximal reflection wavelength of an ink film formed of a third ink is 40 nm or more.
<5> The image recording method described in <4>, in which the maximal reflection wavelength of the ink film formed of the first ink is 380 nm to 490 nm, the maximal reflection wavelength of the ink film formed of the second ink is 600 nm to 800 nm, and the maximal reflection wavelength of the ink film formed of the third ink is 500 nm to 590 nm.
<6> The image recording method described in any one of <1> to <5>, in which in the step of applying at least two inks, the inks are applied such that a total application amount of the at least two inks per unit area is in a range of 3 g/m² to 20 g/m² in the mixed region.
<7> The image recording method described in any one of <2> to <6>, in which in the step of applying at least two inks, the inks are applied such that a total application amount of the polymerizable liquid crystal compounds contained in the at least two inks per unit area is in a range of 1.5 g/m² to 8 g/m² in the mixed region.
<8> The image recording method described in any one of <2> to <7>, in which in the step of applying at least two inks, the inks are applied such that a total application amount of the organic solvents contained in the at least two inks per unit area is in a range of 2.5 g/m² to 12.5 g/m² in the mixed region.
<9> The image recording method described in any one of <1> to <8>, in which the at least two inks all have a viscosity of 7 mPa·s or more.
<10> The image recording method described in any one of <1> to <9>, in which a maximum value of an absolute value of a difference in surface tension between the at least two inks is 1 mN/m or less.
<11> The image recording method described in any one of <1> to <10>, in which in the step of heating a substrate, the substrate is heated to a temperature equal to or higher than 40°C.
<12> An ink jet-recorded material comprising a substrate and an ink film that is provided on the substrate and contains a liquid crystal polymer, in which the ink film includes a plurality of regions having different maximal reflection wavelengths in a plan view, and an alignment state of the liquid crystal polymer continuously changes between two adjacent regions.

According to an embodiment of the present invention, there are provided an image recording method and an ink jet-recorded material capable of reproducing various colors with high color developability.

### DESCRIPTION OF THE PREFERRED EMBODIMENTS

Hereinafter, the image recording method of the present disclosure will be specifically described.

In the present specification, a range of numerical values described using "to" means a range including numerical values described before and after "to" as a minimum value and a maximum value, respectively.

Regarding the ranges of numerical values described stepwise in the present specification, the upper limit or the lower limit described in a certain range of numerical values may be replaced with the upper limit or the lower limit of another range of numerical values described stepwise. In addition, in the ranges of numerical values described in the present specification, the upper limit or the lower limit described in a certain numerical range may be replaced with the value shown in Examples.

In the present specification, in a case where there is a plurality of substances in a composition that corresponds to each component of the composition, unless otherwise specified, the amount of each component of the composition means the total amount of the plurality of substances present in the composition.

In the present specification, a combination of two or more preferred embodiments is a more preferred embodiment.

In the present specification, the term "step" includes not only an independent step but also a step which is not clearly distinguished from another step as long as the intended purpose of the step is achieved.

In the present specification, "(meth)acrylate" means acrylate or methacrylate.

### [Image recording method]

The image recording method of the present disclosure includes a step of preparing at least two inks including a first ink and a second ink, a step of heating a substrate, a step of applying the at least two inks onto the heated substrate by using an ink jet recording method, and a step of irradiating the at least two inks with an active energy ray, in which in the step of applying the at least two inks, a mixed region where the at least two inks are mixed together by the applying is formed in at least a part on the substrate, the first ink contains a first polymerizable liquid crystal compound, and the second ink contains a second chiral compound. Due to the above configuration, the image recording method is capable of reproducing various colors with high color developability.

According to the present disclosure, applying an ink onto a substrate makes it possible to record an ink image. The ink image is a cured substance of an ink. In the image recording method of the present disclosure, in the step of applying at least two inks, a mixed region where the at least two inks are mixed together by the applying is formed in at least a part on the substrate. Because the first ink contains a first polymerizable liquid crystal compound and the second ink contains a second chiral compound, the first polymerizable liquid crystal compound and the second chiral compound are mixed together, and the first polymerizable liquid crystal compound forms a helical structure by the second chiral compound, which results in the formation of cholesteric liquid crystals. The cholesteric liquid crystals selectively reflect light having a wavelength corresponding to the pitch of the helical structure and exhibit the structural color. As a result, the ink image in the present disclosure expresses the structural color. In addition, by controlling the droplet volume of the first ink and the droplet volume of the second ink, it is possible to adjust the mixing ratio between the first polymerizable liquid crystal compound contained in the first ink and the second chiral compound contained in the second ink in the mixed region. Therefore, the formation of the mixed region where the at least two inks are mixed together makes it possible to reproduce various colors.

In the image recording method of the present disclosure, even though the mixed region where the at least two inks are mixed together is formed by the application of the at least two inks onto the heated substrate by using an inkjet recording method, the mixed region is unlikely to expand. Therefore, the polymerizable liquid crystal compounds can be uniformly aligned by the chiral compounds, which makes it possible to reproduce colors with high color developability.

Hereinafter, each step in the image recording method of the present disclosure will be described.

### (Ink preparation step)

The image recording method of the present disclosure includes a step of preparing at least two inks including a first ink and a second ink (hereinafter, also called "ink preparation step").

The first ink contains a first polymerizable liquid crystal compound, and the second ink contains a second chiral compound. That is, the at least two inks contain a polymerizable liquid crystal compound and a chiral compound. By applying the inks to form a mixed region where the at least two inks are mixed together, it is possible to mix the polymerizable liquid crystal compounds with the chiral compounds and to align the polymerizable liquid crystal compounds by the chiral compounds.

The first ink may contain a component other than the first polymerizable liquid crystal compound. In addition, the second ink may contain a component other than the second chiral compound. The combination of the first ink and the second ink in the image recording method of the present disclosure includes the following aspects.
(1) Aspect in which the first ink contains a first polymerizable liquid crystal compound and the second ink contains a second polymerizable liquid crystal compound and a second chiral compound.
(2) Aspect in which the first ink contains a first polymerizable liquid crystal compound and a first chiral compound, and the second ink contains a second polymerizable liquid crystal compound and a second chiral compound.
(3) Aspect in which the first ink contains a first polymerizable liquid crystal compound, a first chiral compound, and a first organic solvent, and the second ink contains a second polymerizable liquid crystal compound and a second chiral compound.
(4) Aspect in which the first ink contains a first polymerizable liquid crystal compound, a first chiral compound, and a first organic solvent, and the second ink contains a second polymerizable liquid crystal compound, a second chiral compound, and a second organic solvent.
(5) Aspect in which the first ink contains a first polymerizable liquid crystal compound and a first organic solvent, and the second ink contains a second chiral compound and a second organic solvent.

In the image recording method of the present disclosure, the first ink preferably contains a first polymerizable liquid crystal compound, a first chiral compound, and a first organic solvent, the second ink preferably contains a second polymerizable liquid crystal compound, a second chiral compound, and a second organic solvent, and an absolute value of a difference between a maximal reflection wavelength of an ink film formed of the first ink and a maximal reflection wavelength of an ink film formed of the second ink is preferably 100 nm or more. That is, it is preferable that both the first ink and the second ink contain a polymerizable liquid crystal compound, a chiral compound, and an organic solvent, and that the color of the ink film formed of the first ink be different from the color of the ink film formed of the second ink.

The first polymerizable liquid crystal compound and the second polymerizable liquid crystal compound may be the same as or different from each other. The first chiral compound and the second chiral compound may be the same as or different from each other. The first organic solvent and the second organic solvent may be the same as or different from each other.

In a case where the absolute value of a difference between the maximal reflection wavelength of the ink film formed of the first ink and the maximal reflection wavelength of the ink film formed of the second ink is 100 nm or more, a big color difference is made, which enables various colors to be reproduced. The absolute value of the difference is more preferably 130 nm or more, and even more preferably 150 nm or more. The upper limit of the absolute value of the difference is, for example, 400 nm.

For example, in a case where the first polymerizable liquid crystal compound and the second polymerizable liquid crystal compound are the same as each other and the first chiral compound and the second chiral compound are the same as each other, by adjusting the content of the polymerizable liquid crystal compounds or the chiral compounds, it is possible to make the absolute value of the difference between the maximal reflection wavelength of the ink film formed of the first ink and the maximal reflection wavelength of the ink film formed of the second ink 100 nm or more.

Specifically, from the viewpoint of reproducing various colors, the maximal reflection wavelength of the ink film formed of the first ink is preferably 380 nm to 490 nm, and the maximal reflection wavelength of the ink film formed of the second ink is preferably 600 nm to 800 nm. The maximal reflection wavelength of the ink film formed of the first ink is more preferably 390 nm to 420 nm, and the maximal reflection wavelength of the ink film formed of the second ink is more preferably 600 nm to 700 nm.

The maximal reflection wavelength of an ink film is calculated by the following method.

An ink is applied onto a transparent polyethylene terephthalate substrate under a condition of a halftone dot rate of 100%, dried at 50°C for 5 minutes, and further dried at 80°C for 5 minutes such that the organic solvent contained in the ink is completely removed. Then, the applied ink is cured with a metal halide lamp (trade name "CSOT-40", manufactured by GS Yuasa Corporation.) to obtain an ink film. The maximal reflection wavelength is calculated by measuring the spectral reflectivity of this ink film with a fluorescence spectrodensitometer (trade name "FD-7", manufactured by Konica Minolta, Inc.). For measurement, black paper as hiding power measuring paper (standard: JIS K 5600 (ISO/FDIS 6504-3: 1998), manufactured by TP Giken Co., Ltd.) is placed under the substrate such that the ink film is the outermost layer, and in this setting, the color is measured.

In the ink preparation step, from the viewpoint of reproducing more various colors, it is preferable to additionally prepare a third ink. The third ink preferably contains a third polymerizable liquid crystal compound, a third chiral compound, and a third organic solvent, and the absolute value of a difference between the maximal reflection wavelength of the ink film formed of the first ink or the maximal reflection wavelength of the ink film formed of the second ink and the maximal reflection wavelength of the ink film formed of the third ink is preferably 40 nm or more. In other words, it is preferable that both the absolute value of the difference between the maximal reflection wavelength of the ink film formed of the first ink and the maximal reflection wavelength of the ink film formed of the third ink, and the absolute value of the difference between the maximal reflection wavelength of the ink film formed of the second ink and the maximal reflection wavelength of the ink film formed of the third ink be 40 nm or more.

The third polymerizable liquid crystal compound may be the same as or different from any of the first polymerizable liquid crystal compound and the second polymerizable liquid crystal compound. The third chiral compound may be the same as or different from any of the first chiral compound and the second chiral compound. The third organic solvent may be the same as or different from any of the first organic solvent and the second organic solvent.

In a case where the absolute value of a difference between the maximal reflection wavelength of the ink film formed of the first ink or the maximal reflection wavelength of the ink film formed of the second ink and the maximal reflection wavelength of the ink film formed of the third ink is 40 nm or more, which enables more various colors to be reproduced. The absolute value of the difference is more preferably 50 nm or more, and even more preferably 70 nm or more. The upper limit of the absolute value of the difference is, for example, 150 nm.

For example, in a case where the first polymerizable liquid crystal compound, the second polymerizable liquid crystal compound, and the third polymerizable liquid crystal compound are the same as each other, and the first chiral compound, the second chiral compound, and the third chiral compound are the same as each other, by adjusting the content of the polymerizable liquid crystal compounds or the chiral compounds, it is possible to make the absolute value of the difference between the maximal reflection wavelength of the ink film formed of the first ink or the maximal reflection wavelength of the ink film formed of the second ink and the maximal reflection wavelength of the ink film formed of the third ink 40 nm or more.

Specifically, from the viewpoint of reproducing more various colors, the maximal reflection wavelength of the ink film formed of the first ink is preferably 380 nm to 490 nm, and the maximal reflection wavelength of the ink film formed of the second ink is preferably 600 nm to 800 nm, and the maximal reflection wavelength of the ink film formed of the third ink is preferably 500 nm to 590 nm. The maximal reflection wavelength of the ink film formed of the first ink is more preferably 390 nm to 470 nm, the maximal reflection wavelength of the ink film formed of the second ink is more preferably 600 nm to 700 nm, and the maximal reflection wavelength of the ink film formed of the third ink is more preferably 500 nm to 550 nm.

Hereinafter, the components contained in the inks will be described. The polymerizable liquid crystal compounds contained in at least two inks prepared in the ink preparation step (for example, the first to third polymerizable liquid crystal compounds) will be described simply as "polymerizable liquid crystal compound". The chiral compounds contained in at least two inks prepared in the ink preparation step (the first to third chiral compounds) will be described simply as "chiral compound". The organic solvents contained in at least two inks prepared in the ink preparation step (for example, the first to third organic solvents) will be described simply as "organic solvent". In addition, at least two inks prepared in the ink preparation step will be described simply as "inks".

### <Polymerizable liquid crystal compound>

In the present disclosure, the polymerizable liquid crystal compound is a liquid crystal compound having a polymerizable group.

The liquid crystal compound may be a rod-like liquid crystal compound or a disk-like liquid crystal compound, but is preferably a rod-like liquid crystal compound.

Examples of the rod-like liquid crystal compound include a rod-like nematic liquid crystal compound. As the rod-like nematic liquid crystal compound, an azomethine compound, an azoxy compound, a cyanobiphenyl compound, a cyanophenyl ester compound, a benzoic acid ester, a cyclohexanecarboxylic acid phenyl ester, a cyanophenylcyclohexane compound, a cyano-substituted phenylpyrimidine compound, an alkoxy-substituted phenylpyrimidine compound, a phenyldioxane compound, a tolan compound, or an alkenylcyclohexylbenzonitrile compound is preferably used. As the rod-like liquid crystal compound, not only low-molecular-weight liquid crystal compounds but also high-molecular-weight liquid crystal compounds can be used.

The polymerizable liquid crystal compound can be obtained by introducing a polymerizable group into a liquid crystal compound. Examples of the polymerizable group include a polymerizable unsaturated group, an epoxy group, and an aziridinyl group. As the polymerizable group, especially, a polymerizable unsaturated group is preferable, and an ethylenically unsaturated group is particularly preferable. The number of polymerizable groups contained in the polymerizable liquid crystal compound is preferably 1 to 6, and more preferably 1 to 3. From the viewpoint of the durability of the image to be obtained, the polymerizable liquid crystal compound more preferably has two polymerizable groups in a molecule.

Examples of the polymerizable liquid crystal compound include the compounds described in Makromol. Chem., vol. 190, p. 2255 (1989), Advanced Materials, vol. 5, p. 107 (1993), US4683327A, US5622648A, US5770107A, WO95/22586A, WO95/24455A, WO97/00600A, WO98/23580A, WO98/52905A, JP1989-272551A (JP-H01-272551A), JP1994-16616A (JP-H06-16616A), JP 1995-110469A (JP-H07-110469A), JP1999-80081A (JP-H11-80081A), and JP2001-328973A.

Specific examples of the polymerizable liquid crystal compound include the following compounds (1) to (17). The polymerizable liquid crystal compound is not limited to the following examples.

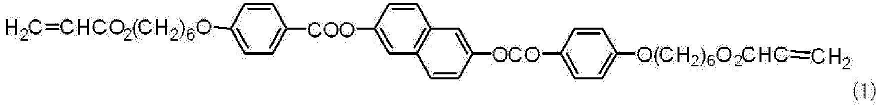

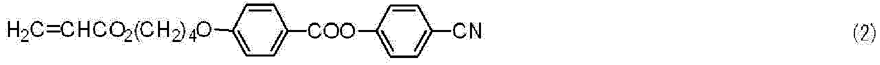

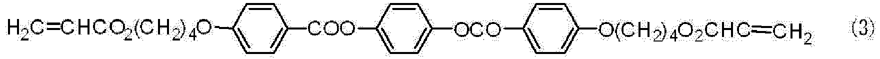

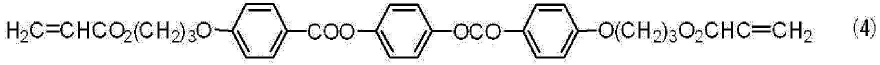

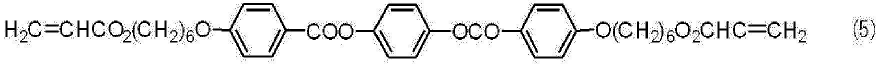

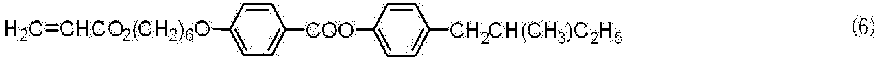

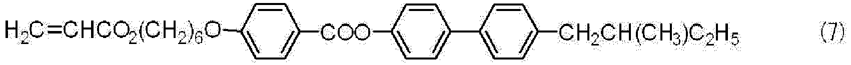

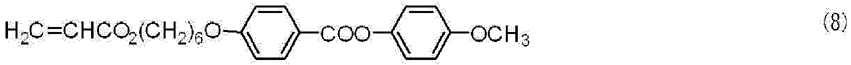

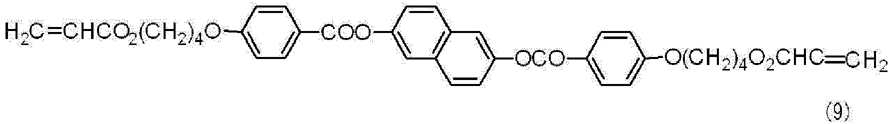

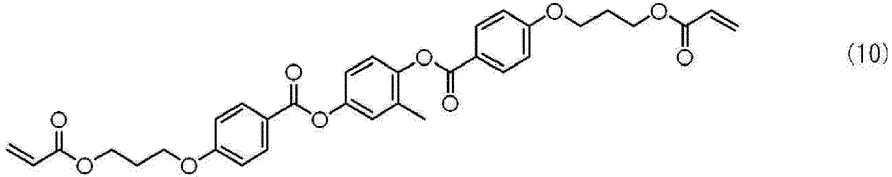

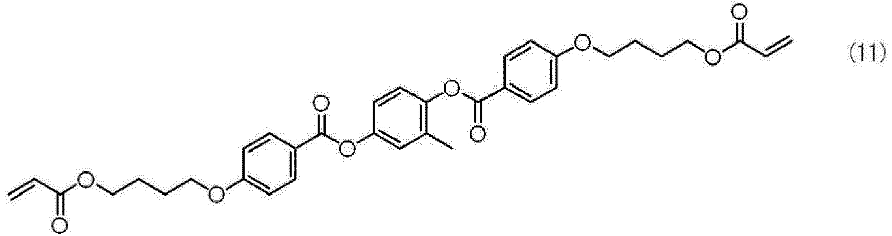

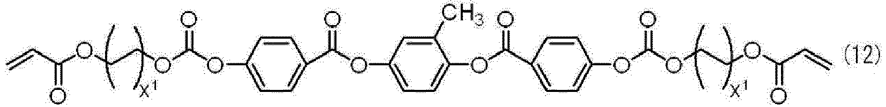

In the compound (12), X¹ each independently represents an integer of 2 to 5.

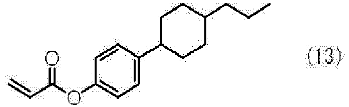

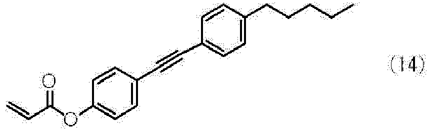

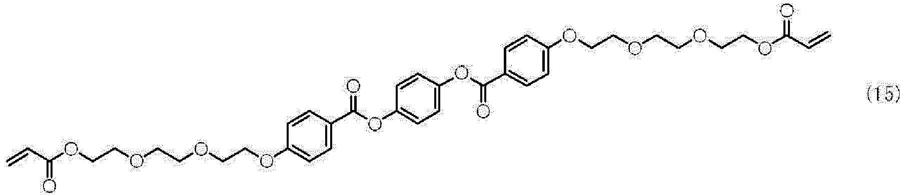

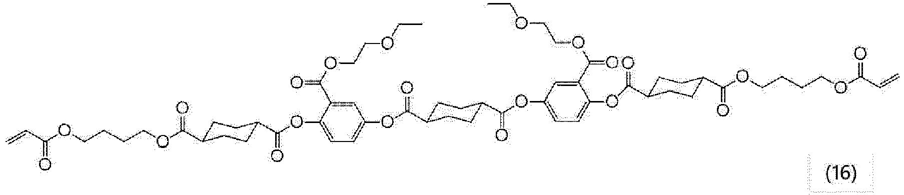

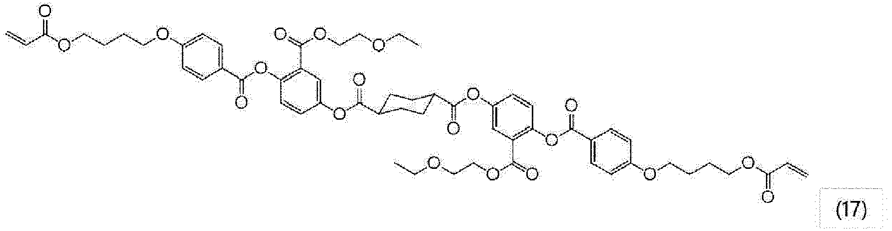

Examples of the polymerizable liquid crystal compound other than those exemplified above include the cyclic organopolysiloxane compounds disclosed JP1982-165480A (JP-S57-165480A).

The ink may contain only one polymerizable liquid crystal compound or two or more polymerizable liquid crystal compounds.

Particularly, it is preferable that the ink contain two or more different polymerizable liquid crystal compounds. In a case where two or more polymerizable liquid crystal compounds are used, color reproducibility can be further improved.

The content of the polymerizable liquid crystal compound with respect to the total amount of the ink is preferably 1% by mass to 70% by mass, more preferably 5% by mass to 60% by mass, and particularly preferably 15% by mass to 45% by mass.

In the present disclosure, from the viewpoint of improving color reproducibility, it is preferable that the first ink and the second ink be different from each other in terms of at least one of the type of polymerizable liquid crystal compound or the content of polymerizable liquid crystal compound. Furthermore, in a case where the third ink is used together with the first ink and the second ink, it is preferable that the first ink, the second ink, and the third ink be different from each other in terms of at least one of the type of polymerizable liquid crystal compound or the content of polymerizable liquid crystal compound. The pitch of the helical structure of the cholesteric liquid crystals derived from the polymerizable liquid crystal compound and the wavelength of light to be selectively reflected vary with the type of the polymerizable liquid crystal compound. By varying the type of the polymerizable liquid crystal compounds, it is possible to obtain ink films of different color tones. Furthermore, by varying the content of the polymerizable liquid crystal compounds, it is possible to vary the mixing ratio of the polymerizable liquid crystal compounds to the chiral compound and to obtain ink films of different color tones.

### (Chiral compound)

The chiral compound is also called an optically active compound. The chiral compound has a function of inducing the helical structure of the polymerizable liquid crystal compound. The twist direction or pitch of the induced helical structure varies with the type and content of the chiral compound.

As the chiral compound, known compounds can be used without particular limitations (for example, see Liquid Crystal Device Handbook, Chapter 3, Section 4-3, Chiral Agent for TN and STN, p. 199, edited by the 142nd Committee of Japan Society for the Promotion of Science, 1989). Examples of the chiral compound include isosorbide derivatives and isomannide derivatives.

The chiral compound generally contains an asymmetric carbon atom. However, the chiral compound may not contain an asymmetric carbon atom as long as the compound has chirality. Examples of the chiral compound include an axially chiral compound having a binaphthyl structure, a helically chiral compound having a helicene structure, and a planarly chiral compound having a cyclophane structure.

The chiral compound may have a polymerizable group. In a case where the chiral compound has a polymerizable group, by a polymerization reaction between the chiral compound and the polymerizable liquid crystal compound, a polymer is formed which has a structural unit derived from the polymerizable liquid crystal compound and a structural unit derived from the chiral compound. In a case where the chiral compound has a polymerizable group, the polymerizable group is preferably the same type of group as the polymerizable group contained in the polymerizable liquid crystal compound. Therefore, the polymerizable group in the chiral compound is preferably a polymerizable unsaturated group, an epoxy group, or an aziridinyl group, more preferably a polymerizable unsaturated group, and particularly preferably an ethylenically unsaturated group. Furthermore, the chiral compound itself may be a liquid crystal compound.

Specific examples of the chiral compound include the following compounds, but the chiral compound that can be used in the ink composition is not limited to the following examples. "Me" in each compound means a methyl group.

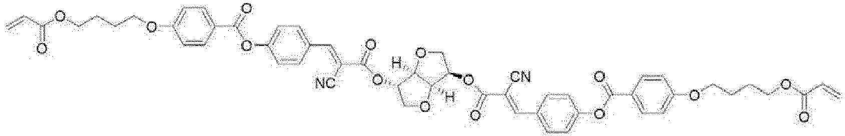

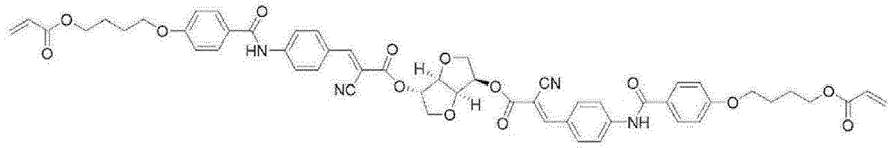

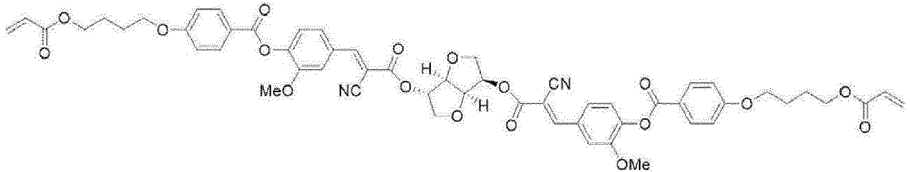

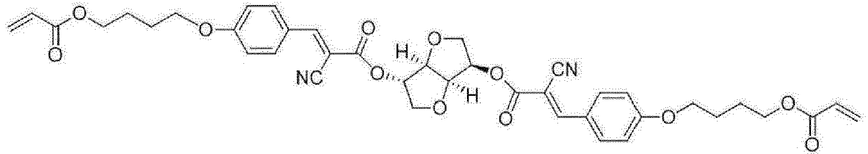

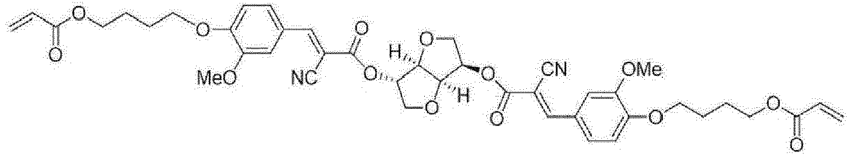

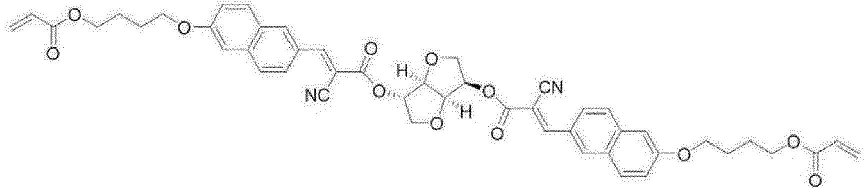

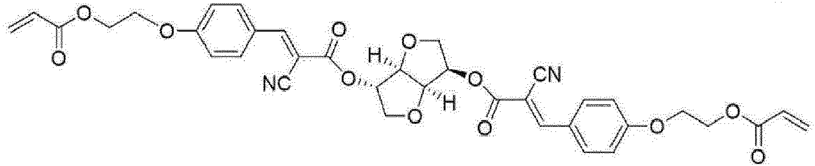

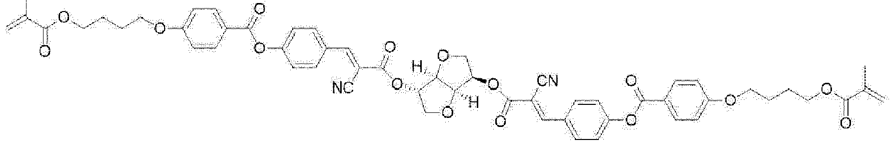

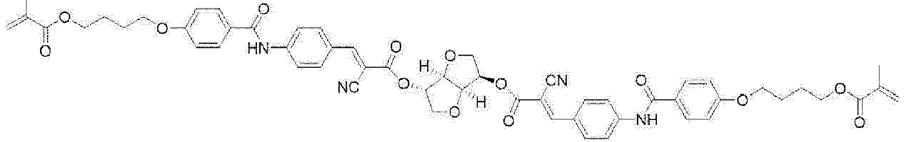

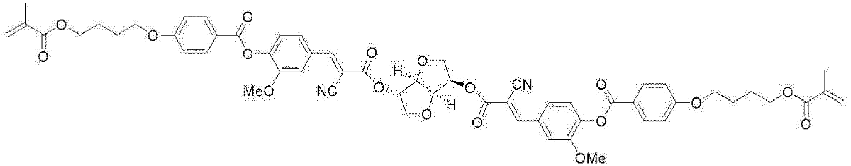

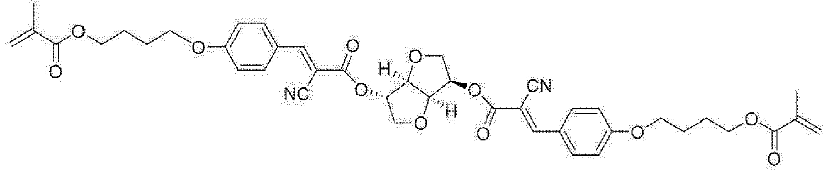

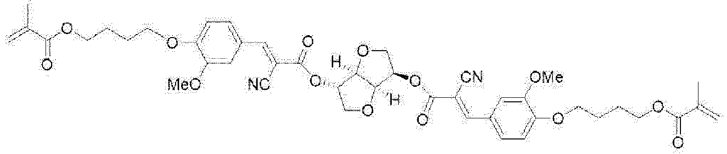

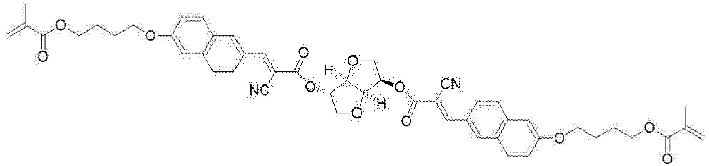

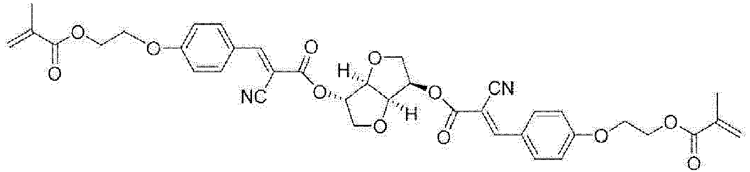

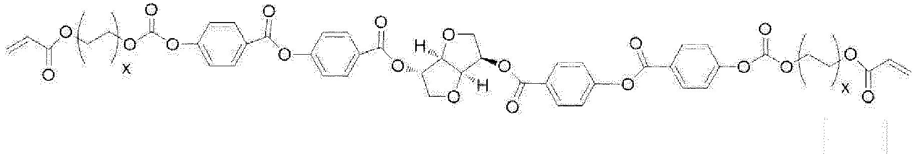

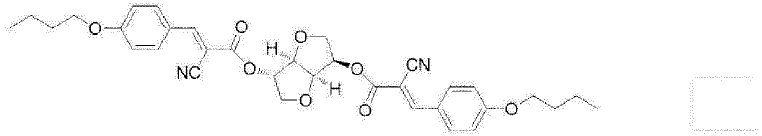

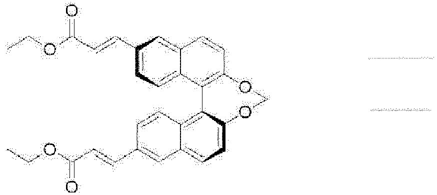

In the above compounds, X each independently represents an integer of 2 to 5.

In the ink composition, the content of the chiral compound with respect to the content of 100 parts by mass of the polymerizable liquid crystal compound is preferably 1 part by mass to 15 parts by mass, and more preferably 1.5 parts by mass to 5 parts by mass.

It is preferable that the content of the chiral compound vary between the first ink and the second ink. Furthermore, in a case where the third ink is used, it is preferable that the content of the chiral compound vary between the first ink, the second ink, and the third ink. The pitch of the helical structure of the cholesteric liquid crystals derived from the polymerizable liquid crystal compound and the wavelength of light to be selectively reflected vary with the content of the chiral compound. By varying the content of the chiral compounds, it is possible to obtain ink films of different color tones. The larger the content of the chiral compound is, the shorter the reflection wavelength tends to be. The smaller the content of the chiral compound is, the longer the reflection wavelength tends to be.

### <Organic solvent>

The type of organic solvent is not particularly limited and can be appropriately selected depending on the purpose.

Examples of the organic solvent include a ketone-based solvent, an alkyl halide-based solvent, an amide-based solvent, a sulfoxide-based solvent, a heterocyclic compound, a hydrocarbon-based solvent, an ester-based solvent, and an ether-based solvent.

The content of the organic solvent with respect to the total amount of the ink is preferably 20% by mass to 90% by mass, more preferably 40% by mass to 80% by mass, and even more preferably 50% by mass to 80% by mass.

### <Polymerization initiator>

The ink preferably further contains a polymerization initiator. The polymerization initiator is preferably a photopolymerization initiator, and more preferably a radical polymerization initiator having a function of generating radicals by irradiation with ultraviolet rays.

Examples of the polymerization initiator include an alkylphenone-based photopolymerization initiator, an acylphosphine oxide-based photopolymerization initiator, an intramolecular hydrogen abstraction-type photopolymerization initiator, an oxime ester-based photopolymerization initiator, and a cationic photopolymerization initiator. As the polymerization initiator, especially, an acylphosphine oxide-based photopolymerization initiator is preferable. Specifically, (2,4,6-trimethylbenzoyl)diphenylphosphine oxide or bis(2,4,6-trimethylbenzoyl)phenylphosphine oxide is preferable.

The content of the polymerization initiator with respect to the content of 100 parts by mass of the polymerizable liquid crystal compound is preferably 0.1 parts by mass to 20 parts by mass, and more preferably 0.5 parts by mass to 12 parts by mass.

### <Additive>

As long as the effects of the present disclosure are not impaired, the ink can contain additives as necessary.

Examples of the additives include a surfactant, a crosslinking agent, and a nonpolymerizable polymer for improving jettability of the ink.

In a case where the ink contains a surfactant, the polymerizable liquid crystal compound molecules are horizontally aligned on the air interface side in the cured ink and the directions of the helical axes are more uniformly controlled. As the surfactant, a compound is preferable which can function as an alignment control agent stably or rapidly establishing a cholesteric structure with planar alignment. Examples of the surfactant include a silicone-based surfactant and a fluorine-based surfactant. Among these, a fluorine-based surfactant is preferable.

The content of the surfactant with respect to the content of 100 parts by mass of the polymerizable liquid crystal compound is preferably 0.01 parts by mass to 10 parts by mass, more preferably 0.01 parts by mass to 5 parts by mass, and even more preferably 0.02 parts by mass to 1 part by mass.

### <Physical properties>

The at least two inks preferably all have a viscosity of 7 mPa·s or more, more preferably all have a viscosity of 8 mPa·s or more, and even more preferably all have a viscosity of 10 mPa s or more. From the viewpoint of jettability of the ink, the upper limit of the viscosity of the ink is, for example, 30 mPa s.

In a case where the viscosity of the at least two inks is 7 mPa s or more, the ink droplets having landed on the substrate do not easily spread. Particularly, in a case where the chiral compound contained in the ink flows and is mixed with the ink droplets having landed adjacent to each other, the boundary between portions where images of different colors are recorded tends to be unclear, and the accuracy of the image tends to deteriorate. On the other hand, in a case where the ink droplets do not easily spread, a high-definition image can be obtained.

The viscosity of the ink is measured at 25°C by using a viscometer. For example, a viscometer (trade name "RE-85L", manufactured by TOKISANGYO) is used for measuring viscosity.

The surface tension of the at least two inks is preferably 20 mN/m to 40 mN/m, and more preferably 23 mN/m to 35 mN/m.

The surface tension of the ink is measured at 25°C by using a surface tensiometer. For example, a surface tensiometer (trade name "DY-700", manufactured by Kyowa Interface Science Co., Ltd.) is used for measuring surface tension.

The maximum value of an absolute value of a difference in surface tension between the at least two inks is preferably 1 mN/m or less, and more preferably 0.7 mN/m or less. In a case where the difference in surface tension between the inks is small and the absolute value of the difference is 1 mN/m or less, when a mixed region where the at least two inks are mixed together is formed, the region where the inks are mixed together at a desired ratio is likely to be fixed. In a case where the region where the inks are uniformly mixed together can be appropriately controlled, the polymerizable liquid crystal compound molecules are uniformly aligned, and an image with less color unevenness can be obtained. Furthermore, in a case where the difference in surface tension is 1 mN/m or less after the ink has landed on the adjacent regions, the occurrence of bleeding can be suppressed.

In the ink preparation step, from the viewpoint of ease of mixing the inks together, it is preferable to prepare at least two inks containing the same type of polymerizable liquid crystal compounds and chiral compounds. In this case, it is preferable that the content of the chiral compounds vary between the at least two inks.

### (Substrate heating step)

The image recording method of the present disclosure includes a step of heating a substrate (hereinafter, also called "substrate heating step"). Preheating the substrate makes it possible to apply an ink onto the heated substrate.

The substrate is not particularly limited, and any substrate can be selected. The substrate may be any of an ink-absorbing substrate, a substrate having low ink absorbency, and a non-ink-absorbing substrate. Examples of the substrate include paper, leather, fabric, and a resin. As a substrate, among these, from the viewpoint of color developability, a non-ink-absorbing substrate is preferable, and a resin substrate is more preferable.

Examples of the resin constituting the resin substrate include cellulose diacetate, cellulose triacetate, cellulose propionate, cellulose butyrate, cellulose acetate butyrate, cellulose nitrate, an acrylic resin, a chlorinated polyolefin resin, a polyether sulfone resin, polyethylene terephthalate (PET), polyethylene naphthalate, nylon, polyethylene, polystyrene, polypropylene, a polycycloolefin resin, a polyimide resin, a polycarbonate resin, and polyvinyl acetal. The resin substrate may be a substrate containing only one of these resins, or may be a substrate prepared by mixing together two or more resins among the above.

The thickness of the substrate is not particularly limited, and is, for example, 1 µm to 10 mm.

In the substrate heating step, a substrate heating unit is not particularly limited, and examples thereof include a heat drum, hot air, an infrared lamp, an oven, a heat plate, and a hot plate. The substrate heating temperature is preferably 40°C or higher, more preferably 50°C to 100°C, and even more preferably 55°C to 80°C.

### (Ink applying step)

The image recording method of the present disclosure includes a step of applying the at least two inks onto the heated substrate by using an inkjet recording method (hereinafter, also called "ink applying step"). In the ink applying step, a mixed region where the at least two inks are mixed together by the applying is formed in at least a part on the substrate.

In the ink applying step, the mixed region where the at least two inks are mixed together by the applying is formed in at least a part on the substrate, which enables various colors to be reproduced with high color developability. In addition, applying the inks onto the heated substrate makes it difficult for the ink droplets having landed on the substrate to spread. Because the ink droplets do not easily spread and stay at the landing position, a high-definition image can be obtained.

The mixed region where the at least two inks are mixed together may be formed in at least a part on the substrate. That is, the mixed region may be formed on the entire surface of the substrate. In addition, as long as the mixed region is formed in a part on the substrate, the mixed region may not be formed in the other parts on the substrate.

In the present disclosure, a mixed region means a region where at least two inks are mixed together on the substrate. Examples of specific aspects in which the mixed region is formed include the following two aspects.

In a case where at least two inks are continuously jetted, an ink is jetted first to form an ink landing region, and then the other ink is jetted and landed on the ink landing region, such that the at least two inks are mixed together. In a case where at least two inks are jetted at the same time, the inks are landed such that ink landing regions formed of the at least two inks at least partially overlap with each other and that the at least two inks are thus mixed together. "Mixed region" in the present disclosure does not include a region where ink landing regions partially overlap with each other as the inks spread on the substrate after at least two inks are jetted such that the ink landing regions do not overlap with each other.

Whether the mixed region is formed can be checked by the following method.

By measuring the color of the reflection wavelength of the mixed region with a fluorescence spectrodensitometer (trade name "FD-7") or the like, it is possible to check whether the reflection wavelength of the mixed region is different from the reflection wavelength of a region that is not the mixed region. In addition, because the color developability of the mixed region is different from the color developability of the region that is not the mixed region, it is easy to visually check whether the mixed region is formed.

In the image recording method of the present disclosure, the ink film (also called "ink layer") formed on the substrate by the applying of an ink in the ink applying step is a single layer.

Examples of the method of recording an image on a substrate include a method of laminating ink layers. With the image recording method of the present disclosure, a single ink layer is formed, which can reduce the number of steps. In addition, what should be taken into consideration in designing an ink is only the interaction (for example, wettability) between a substrate and the ink. Therefore, unlike the case where ink layers are laminated, the interaction between an ink layer and an ink does not need to be considered. Furthermore, in the image recording method of the present disclosure, inks are applied to form a single layer. Therefore, unlike the case where ink layers are laminated, an image having high color developability can be obtained.

As the inkjet recording method, generally, known methods can be used. Examples thereof include an electric charge control method of jetting an ink composition by using electrostatic attraction force, a drop-on-demand method using the vibration pressure of a piezo element (pressure pulse method), an acoustic ink jet method of jetting an ink composition by using radiation pressure by means of converting electric signals into acoustic beams and irradiating the ink composition with the acoustic beams, and a thermal inkjet method of forming bubbles by heating an ink composition and using the generated pressure.

Generally, the image recording method using an ink jet recording device includes a shuttle scan method (also called "serial head method") of recording images by using a short serial head, and a single pass method (also called "line head method") of recording images by using a line head consisting of arrays of recording elements that cover the entire region of a recording medium in a width direction. In the shuttle scan method, images are recorded by the serial head that scans a recording medium in a width direction. On the other hand, in the single pass method, images can be recorded on the entire surface of a recording medium by a method of scanning the recording medium in a direction orthogonal to the arrangement direction of the recording elements. Therefore, unlike the shuttle scan method, the single pass method does not require a transport system such as a carriage that scans the serial head. Furthermore, in the single pass method, complicated scanning control for the movement of a carriage and the recording medium is not required, and only the recording medium moves. Therefore, the recording speed can be further increased compared to the shuttle scan method.

In the ink applying step, the inks are preferably applied such that the total application amount of the at least two inks per unit area is in a range of 3 g/m² to 20 g/m² in the mixed region, more preferably applied such that the total application amount of the at least two inks is in a range of 3.5 g/m² to 20 g/m² or 3.5 g/m² to 18 g/m² in the mixed region, even more preferably applied such that the total application amount of the at least two inks is in a range of 3.5 g/m² to 16 g/m² in the mixed region, and particularly preferably applied such that the total application amount of at least two inks is in a range of 3.5 g/m² to 13 g/m² in the mixed region.

Particularly, in the mixed region, the at least two inks are mixed together. Therefore, the ink application amount in the mixed region is larger than the ink application amount in a region other than the mixed region. In a case where the inks are applied such that the total application amount is in a range of 3.0 g/m² to 20 g/m² in the mixed region, the landed ink droplets do not easily spread, and a high-definition image can be obtained.

In the ink applying step, the inks are preferably applied such that the application amount of inks per one image recording process is also in a range of 3 g/m² to 20 g/m² in a region other than the mixed region, more preferably applied such that the application amount of inks per one image recording process is also in a range of 3.5 g/m² to 20 g/m² or 3.5 g/m² to 18 g/m² in a region other than the mixed region, even more preferably applied such that the application amount of inks per one image recording process is also in a range of 3.5 g/m² to 16 g/m² in a region other than the mixed region, and particularly preferably applied such that the application amount of inks per one image recording process is also in a range of 3.5 g/m² to 13 g/m² in a region other than the mixed region. The region other than the mixed region means a region on the substrate to which only one ink is applied and in which the at least two inks are not mixed together.

In the ink applying step, the inks are preferably applied such that the total application amount of the polymerizable liquid crystal compounds contained in the at least two inks per unit area is in a range of 1 g/m² to 8 g/m² in the mixed region, more preferably applied such that the total application amount of the polymerizable liquid crystal compounds contained in the at least two inks per unit area is in a range of 1.5 g/m² to 8 g/m² in the mixed region, even more preferably applied such that the total application amount of the polymerizable liquid crystal compounds contained in the at least two inks per unit area is in a range of 1.5 g/m² to 7.5 g/m² in the mixed region, and most preferably applied such that the total application amount of the polymerizable liquid crystal compounds contained in the at least two inks per unit area is in a range of 1.5 g/m² to 7 g/m² in the mixed region.

In a case where the inks are applied such that the aforementioned total application amount is in a range of 1 g/m² to 8 g/m², the polymerizable liquid crystal compound molecules are more uniformly aligned, and an image having high color developability can be obtained.

In the ink applying step, the inks are preferably applied such that the application amount of the polymerizable liquid crystal compounds contained in the inks per unit area is also in a range of 1 g/m² to 8 g/m² in a region other than mixed region, more preferably applied such that the application amount of the polymerizable liquid crystal compounds contained in the inks per unit area is also in a range of 1.5 g/m² to 8 g/m² in a region other than the mixed region, even more preferably applied such that the application amount of the polymerizable liquid crystal compounds contained in the inks per unit area is also in a range of 1.5 g/m² to 7.5 g/m² in a region other than the mixed region, and most preferably applied such that the application amount of the polymerizable liquid crystal compounds contained in the inks per unit area is also in a range of 1.5 g/m² to 7 g/m² in a region other than the mixed region.

In the ink applying step, the inks are preferably applied such that the total application amount of the organic solvents contained in the at least two inks per unit area is in a range of 1.5 g/m² to 12.5 g/m² in the mixed region, more preferably applied such that the total application amount of the organic solvents contained in the at least two inks per unit area is in a range of 2.5 g/m² to 12.5 g/m² in the mixed region, and even more preferably applied such that the total application amount of the organic solvents contained in the at least two inks per unit area is in a range of 2.5 g/m² to 10 g/m² in the mixed region.

Particularly, in the mixed region, the at least two inks are mixed together. Therefore, the total application amount of the organic solvents contained in the inks is larger than the total application amount of the organic solvents in a region other than the mixed region. In a case where the inks are applied such that the total application amount is in a range of 1.5g/m² to 12.5 g/m² in the mixed region, the landed ink droplets do not easily spread, and a high-definition image can be obtained.

In the ink applying step, the inks are preferably applied such that the application amount of the organic solvents contained in the inks per unit area is also in a range of 1.5 g/m² to 12.5 g/m² in a region other than the mixed region, more preferably applied such that the application amount of the organic solvents contained in the inks per unit area is also in a range of 2.5 g/m² to 12.5 g/m² in a region other than the mixed region, and even more preferably applied such that the application amount of the organic solvents contained in the inks per unit area is also in a range of 2.5 g/m² to 10 g/m² in a region other than the mixed region.

The ink application amount is calculated using the following method.

On a substrate, an image having an area of 1 m² is recorded at a desired halftone dot rate (a ratio of a portion where an image is recorded to a total area calculated as a percentage). The weight of the substrate before image recording and the weight of the substrate after image recording are measured, and the ink application amount is calculated from the difference in weight. The ink application amount can be arbitrarily changed by the setting of the halftone dot rate and the adjustment of the amount of ink jetted from a device.

The application amount of the polymerizable liquid crystal compound contained in the ink is calculated from the application amount of the ink and the content of the polymerizable liquid crystal compound contained in the ink.

The application amount of the organic solvent contained in the ink is calculated from the ink application amount and the content of the organic solvent contained in the ink.

The total application amount of the ink in the mixed region is calculated as the sum of the application amount of each ink.

In the ink applying step, inks are preferably applied such that the droplet volume of the inks jetted from an ink jet head is 1 pL (picoliter) to 30 pL, and more preferably applied such that the droplet volume of the inks jetted from an ink jet head is 2 pL to 10 pL. The droplet volume means the volume of ink jetted from one nozzle at a time by an ink jet recording method.

In the ink applying step, the inks are preferably applied such that the resolution is 100 dpi (dot per inch) × 100 dpi to 2,400 dpi × 2,400 dpi, and more preferably applied such that the resolution is 200 dpi × 200 dpi to 1,200 dpi × 1,200 dpi. "dpi" means the number of dots per 25.4 mm.

In addition, in the ink applying step, the inks are preferably applied such that the at least two inks form an ink film having a thickness of 1 µm to 20 µm in the mixed region by one image recording process, and more preferably applied such that the at least two inks form an ink film having a thickness of 1 µm to 15 µm in the mixed region by one image recording process. In a case where the inks are applied such that the ink film having a thickness of 1 µm to 20 µm is formed, the applied ink is easily dried, the polymerizable liquid crystal compound molecules are more uniformly aligned, and an image having high color developability can be obtained.

The image recording method of the present disclosure includes a step of irradiating the at least two inks with an active energy ray (hereinafter, also called "active energy ray irradiating step").

Examples of the active energy ray in the active energy ray irradiating step include ultraviolet rays, visible rays, and electron beams. Among these, ultraviolet rays (hereinafter, also called "UV") are preferable.

The peak wavelength of the ultraviolet rays is preferably 200 nm to 405 nm, more preferably 220 nm to 390 nm, and even more preferably 220 nm to 380 nm.

The exposure amount of ultraviolet rays is preferably 20 mJ/cm² to 5 J/cm², and more preferably 100 mJ/cm² to 1,500 mJ/cm². As the irradiation conditions and the basic irradiation method, the irradiation conditions and the irradiation method disclosed in JP1985-132767A (JP-S60-132767A) can be adopted. Specifically, the irradiation method is preferably a method of providing a light source on both sides of a head unit including an inkjet device and scanning the substrate by the head unit and the light source by a so-called shuttle method, or a method of irradiating the substrate with another light source that is not involved in driving.

As the light source for ultraviolet irradiation, a mercury lamp, a gas laser, and a solidstate laser are mainly used. A mercury lamp, a metal halide lamp, and an ultraviolet fluorescent lamp are widely known light sources. Being compact, highly efficient, and low cost and having a long life, UV-LED (light emitting diode) and UV-LD (laser diode) are promising light sources for ultraviolet irradiation. Among these, a metal halide lamp, a highpressure mercury lamp, a medium-pressure mercury lamp, a low-pressure mercury lamp, or UV-LED is preferable as a light source for ultraviolet irradiation.

### [Ink jet-recorded material]

The ink jet-recorded material of the present disclosure comprises a substrate and an ink film that is provided on the substrate and contains a liquid crystal polymer, in which the ink film includes a plurality of regions having different maximal reflection wavelengths in a plan view, and an alignment state of the liquid crystal polymer continuously changes between two adjacent regions.

The ink jet-recorded material of the present disclosure is preferably an ink jet-recorded material obtained by the image recording method described above. For example, by the applying of an ink containing a polymerizable liquid crystal compound onto a substrate, followed by the irradiation with an active energy ray, the polymerizable liquid crystal compound is polymerized, and an ink film containing a liquid crystal polymer is formed.

In the ink jet-recorded material of the present disclosure, an ink film may be provided directly on a substrate, or another layer may be provided between the substrate and the ink film.

Because the ink film includes a plurality of regions having different maximal reflection wavelengths in a plan view, various colors are reproduced with high color developability.

The alignment state of the liquid crystal polymer between two adjacent regions can be checked by the following method.

First, the ink film is cut along the thickness direction of the ink film such that the ink film includes a plurality of regions having different maximal reflection wavelengths in a plan view. In this way, a sample is obtained. A cross-sectional SEM image is observed with a scanning electron microscope ("S-4800" model, manufactured by Hitachi High-Tech Corporation., observation magnification: 10,000X, acceleration voltage: 2.0 kV), and whether or not the image has a stripe pattern of light and shade resulting from the change in refractive index of the cholesteric liquid crystalline phase is checked. In a case where the stripe pattern is checked, it is determined that the liquid crystal has a cholesteric liquid crystalline phase.

In the cross-sectional SEM image, one cycle of the dark region and the bright region of the stripe pattern corresponds to 180° of the helix of the liquid crystal. Therefore, two cycles consisting of a dark region, a bright region, a dark region, and a bright region of the stripe pattern correspond to 360° of the helix of the liquid crystal. That is, the width of two cycles of light and shade representing the stripe pattern corresponds to the length of the helical pitch in the cholesteric liquid crystalline phase.

Because the ink film includes a plurality of regions having different maximal reflection wavelengths, the maximal reflection wavelength also varies between two adjacent regions. Therefore, the length of the helical pitch in the cholesteric liquid crystalline phase varies between the two adjacent regions. At this time, in a case where attention is paid to the two adjacent regions and the length of the helical pitch is found to continuously change, it is determined that the alignment state of the liquid crystal polymer continuously changes.

### Examples

Hereinafter, the present disclosure will be more specifically described based on examples, but the present disclosure is not limited to the following examples as long as the gist of the present disclosure is maintained. Furthermore, the viscosity of an ink is a value measured using a viscometer (trade name "RE-85L", manufactured by TOKISANGYO) at a liquid temperature kept at 25°C. The surface tension of an ink is a value measured using a surface tensiometer (trade name "DY-700" (manufactured by Kyowa Interface Science Co., Ltd.).

### <Example 1>

### [Preparation of ink]

### (Ink Bm1)

The following components were mixed together to prepare an ink Bm1. The viscosity (25°C) of the ink Bm1 was 11 mPa·s.
·Diethylene glycol diethyl ether···61.27 parts by mass
·Mixture A1 of polymerizable liquid crystal compounds···35 parts by mass
·Polymerization initiator: Bis(2,4,6-trimethylbenzoyl)phenylphosphine oxide (trade name "Omnirad 819")···1.5 parts by mass
·Chiral compound A···2.2 parts by mass
·Fluorine-based surfactant (trade name "FTERGENT 208G" manufactured by NEOS COMPANY LIMITED) ··0.03 parts by mass

The mixture of the polymerizable liquid crystal compounds was obtained by mixing together compounds at the following ratio.
Mixture A1 of polymerizable liquid crystal compounds: 50% by mass of compound (10) and 50% by mass of compound (11)
Mixture A2 of polymerizable liquid crystal compounds: 50% by mass of compound (10) and 50% by mass of compound (12)
Mixture A3 of polymerizable liquid crystal compounds: 33% by mass of compound (10), 34% by mass of compound (11), and 33% by mass of compound (12)

The compounds (10) to (12) are rod-like liquid crystal compound. The compound (10), the compound (11), the compound (12) (X¹ = 2), and the chiral compound A have the following structures.

### (Compound (10), Compound (11), and Compound (12))

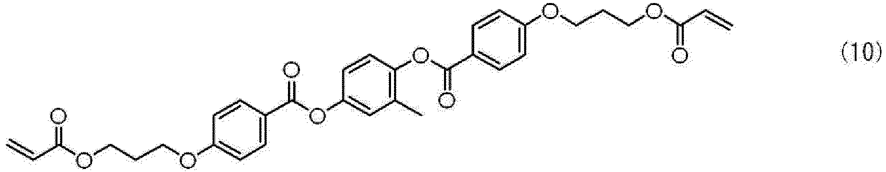

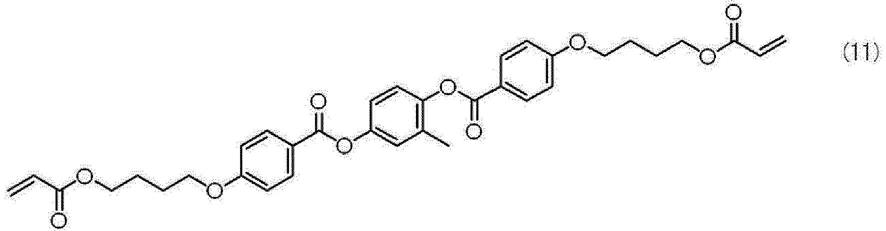

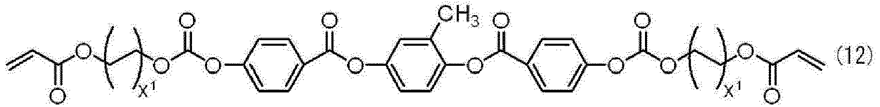

### (Chiral compound A)

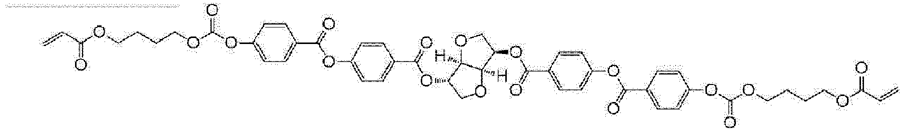

By using a spectral reflectometer (manufactured by Konica Minolta, Inc., trade name "FD-7"), the reflectivity of the ink film formed of the ink Bm1 in the visible range was measured. As a result, the ink Bm1 was found to be an ink forming an ink film having a maximal reflection wavelength of 440 nm. Furthermore, polarization characteristics were measured using a levorotatory circularly polarizing plate. As a result, no reflection spectrum was obtained. That is, the ink Bm1 was an ink forming a dextrorotatory polarized blue ink film. The surface tension of the ink Bm1 was 28 mN/m. Unless otherwise specified, other inks were measured by the same method as the method used for the ink Bm1.

### (Ink Rm1)

An ink Rm1 was prepared by the same method as the ink Bm1, except that the content of the chiral compound A in the ink Bm1 was changed to 1.6 parts by mass from 2.2 parts by mass, and the content of diethylene glycol diethyl ether was adjusted such that the total content of the ink was the same as the total content of the ink Bm1. The viscosity (25°C) of the ink Rm1 was 11 mPa·s. The ink Rm1 was an ink forming a dextrorotatory polarized red ink film reflecting dextrorotatory circularly polarized light having a maximal reflection wavelength of 620 nm. The surface tension of the ink Rm1 was 27.6 mN/m.

### [Image recording]

A PET sheet (trade name "VIEWFUL UV TP-188", manufactured by KIMOTO) was used as a substrate. The substrate was placed on a hot plate prepared by bonding a rubber heater to a metal plate and heated such that the substrate temperature reached 60°C. The ink Bm1 and the ink Rm1 were jetted on the substrate heated to 60°C by using an ink jet printer (trade name "UJF3042HG", manufactured by MIMAKI ENGINEERING CO., LTD.). At an image resolution of 600 dpi × 720 dpi, the ink Bm1 and the ink Rm1 were applied in amounts at ratios adjusted to 100:0, 83:17, 2:1, 50:50, 1:2, 17:83, and 0:100. In this way, data was prepared in which 7 mm × 7 mm images were vertically lined up without gaps. An upsidedown image thereof was placed next to the data. By using the prepared image data, the ink droplet volume was adjusted such that the total application amount of inks in each image region was 15 g/m², and image recording was performed. After the image recording was finished, the substrate was kept at 60°C for 1 minute and further heated at 80°C for 5 minutes. Then, by using a metal halide lamp installed in an ultraviolet irradiation device (trade name "CSOT-40", manufactured by GS Yuasa Corporation.), the substrate was irradiated with ultraviolet A (UV-A, wavelength 320 to 390 nm) at 350 mJ/cm², thereby obtaining an article 1 with a recorded image.

An article 2 with a recorded image was obtained by the same method as the article 1 with a recorded image, except that the 7 mm × 7 mm image was changed to 2 mm × 2 mm image.

### <Example 2>

### [Preparation of ink]

### (Ink Gm1)

An ink Gm1 was prepared by the same method as the ink Bm1, except that the content of the chiral compound A in the ink Bm1 was changed to 1.9 parts by mass from 2.2 parts by mass, and the content of diethylene glycol diethyl ether was adjusted such that the total content of the ink was the same as the total content of the ink Bm1. The viscosity (25°C) of the ink Rm1 was 11 mPa·s. The ink Gm1 was an ink forming a dextrorotatory polarized green ink film reflecting dextrorotatory circularly polarized light having a maximal reflection wavelength of 510 nm. The surface tension of the ink Gm1 was 28 mN/m.

### [Image recording]

A PET sheet (trade name "VIEWFUL UV TP-188", manufactured by KIMOTO) was used as a substrate. The substrate was placed on a rubber heater and heated such that the temperature of the substrate reached 60°C. The ink Bm1, the ink Rm1, and the ink Gm1 were jetted on the substrate heated to 60°C by using an inkjet printer (trade name "UJF3042HG", manufactured by MIMAKI ENGINEERING CO., LTD.). At an image resolution of 600 dpi × 720 dpi, the ink Bm1, the ink Rm1, and the ink Gm1 were applied in amounts at ratios adjusted to 1:0:0, 2:1:0, 1:2:0, 0:1:0, 0:2:1, 0:1:2, and 0:0:1, thereby preparing image data. By using the prepared image data, the ink droplet volume was adjusted such that the total application amount of inks in each image region was 15 g/m², and the same images as Example 1 were recorded without gaps. After the image recording was finished, the substrate was kept at 60°C for 1 minute and further heated at 80°C for 5 minutes. Then, by using a metal halide lamp installed in an ultraviolet irradiation device (trade name "CSOT-40", manufactured by GS Yuasa Corporation.), the substrate was irradiated with ultraviolet A (UV-A, wavelength 320 to 390 nm) at 350 mJ/cm², thereby obtaining an article 1 with a recorded image and an article 2 with a recorded image.

### <Example 3>

An article 1 with a recorded image and an article 2 with a recorded image were obtained by the same method as Example 1, except that the ink droplet volume in Example 1 was adjusted such that the total application amount of inks in each image region was 7 g/m².

### <Example 4>

An article 1 with a recorded image and an article 2 with a recorded image were obtained by the same method as Example 3, except that the temperature of the substrate during ink jetting was changed to 50°C in Example 3.

### <Example 5>

An article 1 with a recorded image and an article 2 with a recorded image were obtained by the same method as Example 3, except that in Example 3, the temperature of the substrate during ink jetting was changed to 80°C, and the substrate was kept at 80°C for 5 minutes after the image recording was finished. That is, in Example 5, the substrate was not additionally heated.

### <Example 6>

An article 1 with a recorded image and an article 2 with a recorded image were obtained by the same method as Example 5, except that in Example 5, the temperature of the substrate during ink jetting was changed to 90°C, and the substrate was kept at 90°C for 5 minutes after the image recording was finished. That is, in Example 6, the substrate was not additionally heated.

### <Example 7>

An article 1 with a recorded image and an article 2 with a recorded image were obtained by the same method as Example 2, except that the ink droplet volume in Example 2 was adjusted such that the total application amount of inks in each image region was 7 g/m².

### <Example 8>

An article 1 with a recorded image and an article 2 with a recorded image were obtained by the same method as Example 7, except that the temperature of the substrate during ink jetting was changed to 50°C in Example 7.

### <Example 9>

An article 1 with a recorded image and an article 2 with a recorded image were obtained by the same method as Example 7, except that in Example 7, the temperature of the substrate during ink jetting was changed to 80°C, and the substrate was kept at 80°C for 5 minutes after the image recording was finished. That is, in Example 9, the substrate was not additionally heated.

### <Example 10>

An article 1 with a recorded image and an article 2 with a recorded image were obtained by the same method as Example 7, except that the ink droplet volume in Example 7 was adjusted such that the total application amount of inks in each image region was 3 g/m².

### <Example 11>

An article 1 with a recorded image and an article 2 with a recorded image were obtained by the same method as Example 7, except that the ink droplet volume in Example 7 was adjusted such that the total application amount of inks in each image region was 1.2 g/m².

### <Example 12>

An article 1 with a recorded image and an article 2 with a recorded image were obtained by the same method as Example 1, except that the ink droplet volume in Example 1 was adjusted such that the total application amount of inks in each image region was 21 g/m².

### <Comparative Example 1>

An article 1 with a recorded image and an article 2 with a recorded image were obtained by the same method as Example 1, except that the substrate was kept at room temperature (25°C) in Example 1 without being heated.

### <Comparative Example 2>

An article 1 with a recorded image and an article 2 with a recorded image were obtained by the same method as Example 2, except that the substrate was kept at room temperature (25°C) in Example 2 without being heated.

### <Example 13>

### [Preparation of ink]

### (Ink Bm2)

The following components were mixed together to prepare an ink Bm2. The viscosity (25°C) of the ink Bm2 was 6 mPa·s.
·Diethylene glycol diethyl ether···68.27 parts by mass
·Mixture A1 of polymerizable liquid crystal compounds···28 parts by mass
·Polymerization initiator: Bis(2,4,6-trimethylbenzoyl)phenylphosphine oxide (trade name "Omnirad 819, manufactured by IGM Resins B.V") 1.5 parts by mass
·Chiral compound A···2.2 parts by mass
·Fluorine-based surfactant (trade name "FTERGENT 208G" manufactured by NEOS COMPANY LIMITED) ··0.03 parts by mass

The ink Bm2 was an ink forming a dextrorotatory polarized blue ink film reflecting dextrorotatory circularly polarized light having a maximal reflection wavelength of 430 nm. The surface tension of the ink Bm2 was 27 mN/m.

### (Ink Rm2)

An ink Rm2 was prepared by the same method as the ink Bm2, except that the content of the chiral compound A in the ink Bm2 was changed to 1.6 parts by mass from 2.2 parts by mass, and the content of diethylene glycol diethyl ether was adjusted such that the total content of the ink was the same as the total content of the ink Bm2. The viscosity (25°C) of the ink Rm2 was 6 mPa·s. The ink Rm2 was an ink forming dextrorotatory polarized red ink film reflecting dextrorotatory circularly polarized light having a maximal reflection wavelength of 620 nm. The surface tension of the ink Rm2 was 27 mN/m.

### [Image recording]

An article with a recorded image was obtained by the same method as Example 5, except that in Example 5, the ink Bm2 was used instead of the ink Bm1 and the ink Rm2 was used instead of the ink Rm1.

### <Example 14>

### [Preparation of ink]

### (Ink Rm3)

An ink Rm3 was prepared by the same method as the ink Rm1, except that the content of the fluorine-based surfactant in the ink Rm1 was changed to 0.2 parts by mass from 0.03 parts by mass, and the content of diethylene glycol diethyl ether was adjusted such that the total content of the ink was the same as the total content of the ink Rm1. The viscosity (25°C) of the ink Rm3 was 11 mPa s. The ink Rm3 was an ink forming a dextrorotatory polarized red ink film reflecting dextrorotatory circularly polarized light having a maximal reflection wavelength of 620 nm. The surface tension of the ink Rm3 was 25 mN/m.

### [Image recording]

An article with a recorded image was obtained by the same method as Example 5, except that in Example 5, the ink Rm3 was used instead of the ink Rm1.

In Table 1, the types of inks used in examples and comparative examples; the application amounts of inks, organic solvents, and polymerizable liquid crystal compounds; the maximum value of an absolute value of a difference in surface tension; and the temperature of the substrate during ink jetting are described.

The maximum value of an absolute value of a difference in surface tension was determined by calculating the absolute value of a difference in surface tension between inks and adopting the largest value among the calculated absolute values.

### <Evaluation>

### (1) Color developability in plurality of wavelength ranges

The prepared article 1 with a recorded image was placed on a black surface of hiding power measuring paper (JIS K 5600), and spectral reflection spectra in a plurality of wavelength ranges were measured using a spectral reflectometer (trade name "FD-7", manufactured by Konica Minolta, Inc.) to evaluate the color developability in a plurality of color gamuts. The spectral reflection spectra were measured under the conditions of reflection measurement, an observation field of view of 2°, an observation light source of D50, and no polarizing filter. Specifically, the spectral reflection spectra are measured in seven wavelength regions having wavelengths of 420 nm to 460 nm, 465 nm to 475 nm, 480 nm to 520 nm, 525 nm to 550 nm, 555 nm to 565 nm, 570 nm to 605 nm, and 610 nm to 730 nm, and whether or not the article 1 with a recorded image has a reflection wavelength peak in each wavelength range was checked. In addition, for the article 2 with a recorded image, whether or not the same color as that of the article 1 with a recorded image can be visually recognized was checked. The evaluation standard is as follows. The evaluation results are shown in Table 1.

### <Evaluation standard>

7: The article 1 with a recorded image has a reflection wavelength peak having a reflectivity of 1% or more in all wavelength ranges, and it is visually recognized that the same color as that of the article 1 with a recorded image can be reproduced in the article 2 with a recorded image in all wavelength ranges.
6: The article 1 with a recorded image has a reflection wavelength peak having a reflectivity of 1% or more in all wavelength ranges, and it is visually recognized that the same color as that of the article 1 with a recorded image can be reproduced in the article 2 with a recorded image in 4 to 6 ranges.
5: The article 1 with a recorded image has a reflection wavelength peak having a reflectivity of 1% or more in 6 wavelength ranges, and it is visually recognized that the same color as that of the article 1 with a recorded image can be reproduced in the article 2 with a recorded image in all wavelength ranges.
4: The article 1 with a recorded image has a reflection wavelength peak having a reflectivity of 1% or more in 6 wavelength ranges, and it is visually recognized that the same color as that of the article 1 with a recorded image can be reproduced in the article 2 with a recorded image in 4 or 5 ranges.
3: The article 1 with a recorded image has a reflection wavelength peak having a reflectivity of 1% or more in 5 wavelength ranges, and it is visually recognized that the same color as that of the article 1 with a recorded image can be reproduced in the article 2 with a recorded image in all wavelength ranges.
2: The article 1 with a recorded image has a reflection wavelength peak having a reflectivity of 1% or more in 5 wavelength ranges, and it is visually recognized that the same color as that of the article 1 with a recorded image can be reproduced in the article 2 with a recorded image in 4 ranges.
1: The article 1 with a recorded image has a reflection wavelength peak having a reflectivity of 1% or more in 4 or less wavelength ranges, and it is visually recognized that the same color as that of the article 1 with a recorded image can be reproduced in the article 2 with a recorded image in 3 or less ranges.

### (2) Glossiness

The prepared article 1 with a recorded image was placed on a black surface of hiding power measuring paper (standard: JIS K 5600, manufactured by TP Giken Co., Ltd.). The image was visually observed to evaluate glossiness. The evaluation standard is as follows. 2 to 4 are levels at which no problem arises in practical use. The evaluation results are shown in Table 1.

### <Evaluation standard>

4: The image has excellent glossiness.
3: The image has glossiness.
2: The image has slight glossiness.
1: The image has no glossiness and is dull in color.

### (3) Uniformity

The prepared article 1 with a recorded image was placed on a black surface of hiding power measuring paper (JIS K 5600) and visually observed to check whether or not the target observation region has turbidness or unevenness. The target observation region was a mixed region where at least two inks were mixed together. In a case where the image has neither turbidness nor unevenness, it can be said that the uniformity of the image is high. The evaluation standard is as follows. 2 to 4 are levels at which no problem arises in practical use. The evaluation results are shown in Table 1.

### <Evaluation standard>

4: The image has neither turbidness nor unevenness.
3: The image has slight turbidness or unevenness.
2: The image has slight turbidness or unevenness that can be visually confirmed.
1: The image has obvious turbidness or unevenness, which is problematic for practical use.

### (4) Image quality (accuracy)

The prepared article with a recorded image was placed on a black surface of hiding power measuring paper (JIS K 5600) and visually observed to check whether or not color mixing is observed between adjacent image regions. The evaluation standard is as follows. 2 to 4 are levels at which no problem arises in practical use. The evaluation results are shown in Table 1.

### <Evaluation standard>

5: No color mixing is observed, or color mixing is substantially not observed.
4: Extremely slight color mixing is observed.
3: Slight color mixing is observed, but the portion where color mixing has occurred is not noticeable.
2: Color mixing is observed, and the portion where color mixing has occurred is somewhat noticeable.
1: Colors are completely mixed together in a wide region that is noticeable.

**[Table 1]**

| | Type of ink | | | Application amount (g/m²) | | | Difference in surface tension (mN/m) | Substrate temperature (°C) | Evaluation | | | |
|---|---|---|---|---|---|---|---|---|---|---|---|---|
| | First ink | Second ink | Third ink | Ink | Polymerizable liquid crystal compound | Organic solvent | | | Color developability | Glossiness | Uniformity | Image quality |
| Example I | Bm 1 | Rm 1 | - | 15 | 5.3 | 9.2 | 0.4 | 60 | 3 | 3 | 3 | 2 |
| Example 2 | Bm 1 | Rm 1 | Gm 1 | 15 | 5.3 | 9.2 | 0.4 | 60 | 4 | 3 | 3 | 2 |
| Example 3 | Bm 1 | Rm 1 | - | 7 | 2.5 | 4.3 | 0.4 | 60 | 5 | 4 | 4 | 4 |
| Example 4 | Bm 1 | Rm 1 | - | 7 | 2.5 | 4.3 | 0.4 | 50 | 4 | 3 | 2 | 3 |
| Example 5 | Bm 1 | Rm 1 | - | 7 | 2.5 | 4.3 | 0.4 | 80 | 5 | 4 | 4 | 5 |
| Example 6 | Bm 1 | Rm 1 | - | 7 | 2.5 | 4.3 | 0.4 | 90 | 5 | 4 | 3 | 5 |
| Example 7 | Bm 1 | Rm 1 | Gm 1 | 7 | 2.5 | 4.3 | 0.4 | 60 | 7 | 4 | 4 | 4 |
| Example 8 | Bm 1 | Rm 1 | Gm 1 | 7 | 2.5 | 4.3 | 0.4 | 50 | 5 | 3 | 2 | 3 |
| Example 9 | Bm 1 | Rm 1 | Gm 1 | 7 | 2.5 | 4.3 | 0.4 | 80 | 7 | 4 | 4 | 5 |
| Example 10 | Bm 1 | Rm 1 | Gm 1 | 3 | 1.1 | 1.8 | 0.4 | 60 | 7 | 4 | 4 | 5 |
| Example 11 | Bm 1 | Rm 1 | Gm 1 | 1.2 | 0.4 | 0.7 | 0.4 | 60 | 7 | 2 | 4 | 5 |
| Example 12 | Bm 1 | Rm 1 | - | 21 | 7.4 | 12.9 | 0.4 | 60 | 2 | 2 | 2 | 2 |
| Example 13 | Bm 2 | Rm 2 | - | 7 | 2.0 | 4.8 | 0 | 80 | 3 | 2 | 3 | 2 |
| Example 14 | Bm 1 | Rm 3 | - | 7 | 2.5 | 4.3 | 3.0 | 80 | 4 | 4 | 3 | 3 |
| Comparative Example 1 | Bm 1 | Rm 1 | - | 15 | 5.3 | 9.2 | 0.0 | 25 | 1 | 1 | 1 | 1 |
| Comparative Example 2 | Bm 1 | Rm 1 | Gm 1 | is | 5.3 | 9.2 | 0.0 | 25 | 2 | 1 | 1 | 1 |

As shown in Table 1, it has been found that Examples 1 to 13 exhibit excellent color developability in a plurality of wavelength ranges, because these examples include a step of preparing at least two inks including a first ink and a second ink, a step of heating a substrate, a step of applying the at least two inks onto the heated substrate by using an ink jet recording method, and a step of irradiating the at least two inks with an active energy ray, and inks are applied in the step of applying the at least two inks such that a mixed region where the at least two inks are mixed together is formed in at least a part on the substrate. That is, it has been found that various colors can be reproduced with high color developability in Examples 1 to 13.

On the other hand, Comparative Examples 1 and 2 have failed to reproduce various colors with high color developability, because these comparative examples do not include a step of heating a substrate, and at least two inks are not applied onto a heated substrate.

In Example 1, inks were applied such that the total application amount of the at least two inks per unit area was in a range of 3 g/m² to 20 g/m² in the mixed region. Therefore, compared to Example 12, Example 1 could reproduce more various colors with high color developability, further suppressed the turbidness or unevenness of images, and produced images having higher glossiness.

In Example 2, inks were applied such that a mixed region where three inks were mixed together was formed in at least a part on the substrate. Therefore, compared to Example 1, Example 2 could reproduce more various colors with high color developability.

In Example 3, inks were applied such that the total application amount of the at least two inks per unit area was in a range of 3.5 g/m² to 13 g/m² in the mixed region. Therefore, compared to Example 1, Example 3 could reproduce more various colors with high color developability, further suppressed turbidness or unevenness of images, and produced higher-definition images with glossiness.

In Example 3, the temperature of a substrate during ink jetting was 55°C or higher. Therefore, compared to Example 4, Example 3 could reproduce more various colors with high color developability, further suppressed turbidness or unevenness of images, and produced higher-definition images with glossiness.

In Example 5, the temperature of a substrate during ink jetting was 80°C or lower. Therefore, compared to Example 6, Example 5 further suppressed turbidness or unevenness of images.

In Example 7, inks were applied such that the total application amount of the at least two inks per unit area was in a range of 13 g/m² or less in the mixed region. Therefore, compared to Example 2, Example 7 could reproduce more various colors with high color developability, further suppressed turbidness or unevenness of images, and produced higher-definition images with glossiness. Furthermore, because three inks were used, color developability of Example 7 was better than color developability of Example 3. In Example 10, inks were applied such that the total application amount of the at least two inks per unit area was in a range of 3 g/m² to 20 g/m² in the mixed region. Therefore, compared to Example 11, Example 10 could reproduce more various colors with high color developability.

In Example 7, the temperature of a substrate during ink jetting was 55°C or higher. Therefore, compared to Example 8, Example 7 could reproduce more various colors with high color developability, further suppressed turbidness or unevenness of images, and produced higher-definition images with glossiness.

In Example 5, the at least two inks both had a viscosity of 7 mPa s or more. Therefore, compared to Example 13, Example 5 could reproduce more various colors with high color developability, and further suppressed turbidness and unevenness of images.

In Example 5, the maximum value of the absolute value of a difference in surface tension between the inks was 1 mN/m or less. Therefore, compared to Example 14, Example 5 could reproduce more various colors with high color developability, further suppressed turbidness and unevenness of images, and produced higher-definition images.

### <Examples 101 to 103>

### [Image recording]

An article 1 with a recorded image and an article 2 with a recorded image were obtained by the same method as Examples 1, 3, and 7, except that the ink jet recording device was changed to an ink jet printer (trade name "SUJV-160", manufactured by MIMAKI ENGINEERING CO., LTD.), the heater temperature was set to 70°C, and exposure was performed using an exposure machine installed in the inkjet printer.

As a result of performing the same evaluations as in Examples 1, 3, and 7, various colors could be reproduced with high color developability in Examples 101 to 103 as well.

### <Example 200>

### [Preparation of ink]

### (Ink Nm1)

The following components were mixed together to prepare an ink Nm1. The viscosity (25°C) of the ink Nm1 was 9 mPa·s.
·Diethylene glycol diethyl ether···63.43 parts by mass
·Mixture of polymerizable liquid crystal compounds···35 parts by mass
·Polymerization initiator: Bis(2,4,6-trimethylbenzoyl)phenylphosphine oxide (trade name "Omnirad 819, manufactured by IGM Resins B.V") 1.5 parts by mass
·Fluorine-based surfactant (trade name "FTERGENT 208G" manufactured by NEOS COMPANY LIMITED) ··0.03 parts by mass

The mixture of polymerizable liquid crystal compounds consists of 33.4% by mass of a compound (10), 33.3% by mass of a compound (11), and 33.3% by mass of a compound (12) (X¹ = 2). The compounds (10) to (12) are rod-like liquid crystal compound.

### (Ink Nm2)

The following components were mixed together to prepare an ink Nm2. The viscosity (25°C) of the ink Nm2 was 1.7 mPa·s.
·Diethylene glycol diethyl ether···94.7 parts by mass
·Polymerization initiator: Bis(2,4,6-trimethylbenzoyl)phenylphosphine oxide (trade name "Omnirad 819, manufactured by IGM Resins B.V") 1.5 parts by mass
·Chiral compound A···4 parts by mass
·Fluorine-based surfactant (trade name "FTERGENT 208G" manufactured by NEOS COMPANY LIMITED) ··0.03 parts by mass

### [Image recording]

A PET sheet (trade name "VIEWFUL UV TP-188", manufactured by KIMOTO) was used as a substrate. The substrate was placed on a rubber heater and heated such that the temperature of the substrate reached 60°C. The ink Nm1 and the ink Nm2 were jetted on the substrate heated to 60°C by using an inkjet printer (trade name "UJF3042HG", manufactured by MIMAKI ENGINEERING CO., LTD.). Ink images were recorded by varying the application amount of the ink Nm2 such that a mixed region where the ink Nm1 and the ink Nm2 were mixed together is formed at an image resolution of 600 dpi × 720 dpi. After the image recording was finished, the substrate was kept at 60°C for 1 minute and further heated at 80°C for 5 minutes. Then, by using a metal halide lamp installed in an ultraviolet irradiation device (trade name "CSOT-40", manufactured by GS Yuasa Corporation.), the substrate was irradiated with ultraviolet A (UV-A, wavelength 320 to 390 nm) at 350 mJ/cm², thereby obtaining an article 1 with a recorded image.

An article 2 with a recorded image was obtained by the same method as the article 1 with a recorded image, except that the 7 mm × 7 mm image was changed to 2 mm × 2 mm image.

It has been found that the color of the obtained article with a recorded image varies with the application amount of the ink Nm2.

That is, even in Example 200, various colors could be reproduced with high color developability.

### <Examples 15 to 28>

An article 1 with a recorded image and an article 2 with a recorded image were obtained by the same method as Examples 1 to 14, except that the mixture A1 of polymerizable liquid crystal compounds was changed to the mixture A2 of polymerizable liquid crystal compounds in Examples 1 to 14. As a result of performing the same evaluation as in Examples 1 to 14, the same results were obtained in Examples 15 to 28.

### <Examples 104 to 106>

In Examples 101 to 103, the same evaluation as in Examples 15, 17, and 21 was performed using the same inks as in Examples 15, 17, and 21. As a result, various colors could be reproduced with high color developability in Examples 104 to 106 as well.

### <Examples 29 to 42>

An article 1 with a recorded image and an article 2 with a recorded image were obtained by the same method as Examples 1 to 14, except that the mixture A1 of polymerizable liquid crystal compounds was changed to the mixture A3 of polymerizable liquid crystal compounds in Examples 1 to 14. As a result of performing the same evaluation as in Examples 1 to 14, the same results were obtained in Examples 29 to 42.

### <Examples 107 to 109>

In Examples 101 to 103, the same evaluation as in Examples 29, 31, and 35 was performed using the same inks as in Examples 29, 31, and 35. As a result, various colors could be reproduced with high color developability in Examples 107 to 109 as well.

The entire disclosure of Japanese Patent Application No. 2020-217654, filed December 25, 2020, is incorporated into the present specification by reference. In addition, all documents, patent applications, and technical standards described in the present specification are incorporated into the present specification by reference, as if each of the documents, the patent applications, and the technical standards is specifically and individually described.

## Claims

1. An image recording method comprising:
a step of preparing at least two inks including a first ink and a second ink;
a step of heating a substrate;
a step of applying the at least two inks onto the heated substrate by using an ink jet recording method; and
a step of irradiating the at least two inks with an active energy ray,
wherein in the step of applying the at least two inks, a mixed region where the at least two inks are mixed together by the applying is formed in at least a part on the substrate,
the first ink comprises a first polymerizable liquid crystal compound, and
the second ink comprises a second chiral compound.

2. The image recording method according to claim 1,
wherein the first ink comprises the first polymerizable liquid crystal compound, a first chiral compound, and a first organic solvent,
the second ink comprises a second polymerizable liquid crystal compound, the second chiral compound, and a second organic solvent, and
an absolute value of a difference between a maximal reflection wavelength of an ink film formed of the first ink and a maximal reflection wavelength of an ink film formed of the second ink is 100 nm or more.

3. The image recording method according to claim 1 or 2,
wherein a maximal reflection wavelength of an ink film formed of the first ink is 380 nm to 490 nm, and
a maximal reflection wavelength of an ink film formed of the second ink is 600 nm to 800 nm.

4. The image recording method according to any one of claims 1 to 3,
wherein in the step of preparing at least two inks, a third ink comprising a third polymerizable liquid crystal compound, a third chiral compound, and a third organic solvent is additionally prepared, and
an absolute value of a difference between a maximal reflection wavelength of an ink film formed of the first ink or a maximal reflection wavelength of an ink film formed of the second ink and a maximal reflection wavelength of an ink film formed of the third ink is 40 nm or more.

5. The image recording method according to claim 4,
wherein the maximal reflection wavelength of the ink film formed of the first ink is 380 nm to 490 nm,
the maximal reflection wavelength of the ink film formed of the second ink is 600 nm to 800 nm, and
the maximal reflection wavelength of the ink film formed of the third ink is 500 nm to 590 nm.

6. The image recording method according to any one of claims 1 to 5,
wherein in the step of applying at least two inks, the inks are applied such that a total application amount of the at least two inks per unit area is in a range of 3 g/m² to 20 g/m² in the mixed region.

7. The image recording method according to any one of claims 2 to 6,
wherein in the step of applying at least two inks, the inks are applied such that a total application amount of the polymerizable liquid crystal compounds comprised in the at least two inks per unit area is in a range of 1.5 g/m² to 8 g/m² in the mixed region.

8. The image recording method according to any one of claims 2 to 7,
wherein in the step of applying at least two inks, the inks are applied such that a total application amount of the organic solvents comprised in the at least two inks per unit area is in a range of 2.5 g/m² to 12.5 g/m² in the mixed region.

9. The image recording method according to any one of claims 1 to 8,
wherein the at least two inks all have a viscosity of 7 mPa·s or more.

10. The image recording method according to any one of claims 1 to 9,
wherein a maximum value of an absolute value of a difference in surface tension between the at least two inks is 1 mN/m or less.

11. The image recording method according to any one of claims 1 to 10,
wherein in the step of heating a substrate, the substrate is heated to a temperature equal to or higher than 40°C.

12. An ink j et-recorded material comprising:
a substrate; and
an ink film that is provided on the substrate and contains a liquid crystal polymer,
wherein the ink film includes a plurality of regions having different maximal reflection wavelengths in a plan view, and
an alignment state of the liquid crystal polymer continuously changes between two adjacent regions.
